# FASCICULE DE BREVET EUROPEEN

(11) **EP 0 486 402 B1**
(45) Date de publication et mention de la délivrance du brevet: **02.08.1995**
(21) Numéro de dépôt: 91403072.1
(22) Date de dépôt: 15.11.1991
(51) Int. Cl.: F16J 1/00, F16F 9/32, B29C 43/12, B29C 43/18, B29D 31/00

(54) **Piston composite et son procédé de réalisation**
Verbundkolben und Verfahren zu seiner Herstellung
Composite piston and method of manufacturing

(30) Priorité: 15.11.1990 FR 9014227
(43) Date de publication de la demande: 20.05.1992
(73) Titulaire: COMPAGNIE PLASTIC OMNIUM Société Anonyme dite:, 69007 Lyon (FR)
(72) Inventeur: Moret de Rocheprise, Bernard, F-52600 Chalindrey (FR)
(74) Mandataire: Leszczynski, André

(56) Documents cités:
- EP-A- 0 345 561
- FR-A- 1 442 960
- GB-A- 822 744
- GB-A- 881 175
- US-A- 3 730 305
- US-A- 4 615 859

## Description

La présente invention est relative à un procédé pour réaliser un piston composite comportant un corps de piston métallique et une garniture en résine fluorée notamment en polytétrafluoroéthylène (PTFE).

Un procédé pour réaliser un piston composite de ce type est illustré dans EP-A-0345 561.

Dans ce document, la garniture est constituée d'une bague de PTFE, réalisée à partir d'une ébauche, présentant un diamètre inférieur au diamètre du piston, ladite bague étant expansée radialement, enfilée sur le corps de piston puis pressée sur celui-ci.

Les différentes étapes de mise en place de la bague destinée à former la garniture sur le corps de piston nécessitent des outillages particuliers compliquant et ralentissant le montage, rendant ainsi difficile une automatisation du processus de montage de la garniture sur le corps de piston.

De plus, il s'avère que, malgré un certain frettage dû à l'effet de mémoire du PTFE, on constate, en fonctionnement, des jeux entre la garniture et le corps du piston entraînant, d'une part, des bruits de fonctionnement et, d'autre part, une usure accélérée.

La présente invention se propose d'éviter les inconvénients des pistons du type connu mentionnés ci-dessus en permettant de réaliser un piston composite ne comportant pas de jeux en cours de fonctionnement entre le corps de piston et la garniture et qui se prête en outre à une fabrication en grande série facilement automatisable.

Le procédé pour réaliser un piston selon l'invention se caractérise essentiellement par le fait que la garniture en matériau fluoré, notamment en PTFE est surmoulée sur le corps de piston métallique.

Avantageusement la résine fluorée est chargée, par exemple avec des fibres de verre courtes, du graphite ou du carbone.

La quantité de charge est avantageusement sensiblement égale à 20 % en poids.

Le corps de piston métallique peut être réalisé par tout procédé approprié par exemple par estampage, fonderie, moulage et en particulier par frittage.

Le corps de piston peut être plein ou creux, c'est-à-dire comportant un évidement central, et la périphérie du corps de piston comporte avantageusement une portée centrale de plus grand diamètre autour de laquelle est surmoulée la garniture.

Le surmoulage de la garniture est de préférence réalisé par une étape de compression isostatique à une pression comprise entre 200 et 500 Kg/cm2, de préférence entre 300 et 350 Kg/cm2, suivie d'une cuisson à une température, notamment de l'ordre de 370°C, suffisante pour provoquer le frittage de la résine fluorée.

Après refroidissement, on procède avantageusement à un usinage de la surface externe de la garniture.

La compression isostatique peut s'effectuer dans un moule souple de forme tubulaire à l'intérieur duquel est mis en place le piston. Une poudre de résine fluorée, notamment de PTFE vierge ou chargé, est alors introduite entre le piston et le moule souple.

Selon l'invention, il est possible de réaliser l'étape de compression isostatique suivie de l'étape de cuisson dans un moule dans lequel sont mis en place plusieurs pistons empilés.

Ainsi selon les dimensions des pistons et du moule, il est possible de fabriquer un grand nombre de pistons composites simultanément, dans la pratique plusieurs dizaines, au cours d'une seule étape de moulage isostatique.

Après compression, cuisson et refroidissement contrôlé, on sépare les pistons par tranchage de la gaine de résine fluorée entourant l'ensemble des pistons empilés, et on procède à un usinage de finition de la garniture de chaque piston.

Dans le cas de pistons creux comportant un évidement central, les pistons empilés sont avantageusement maintenus dans le moule en étant enfilés sur une tige centrale.

Dans le but de mieux faire comprendre l'invention, on va maintenant en décrire des exemples de mise en oeuvre nullement limitatifs en se référant au dessin annexé dans lequel :
- la figure 1 est une vue en coupe d'un premier mode de réalisation de piston composite selon l'invention ;
- la figure 2 est une vue analogue d'un second mode de réalisation et
- la figure 3 illustre schématiquement une étape de moulage isostatique permettant de réaliser simultanément plusieurs pistons tels que celui illustré à la figure 2.

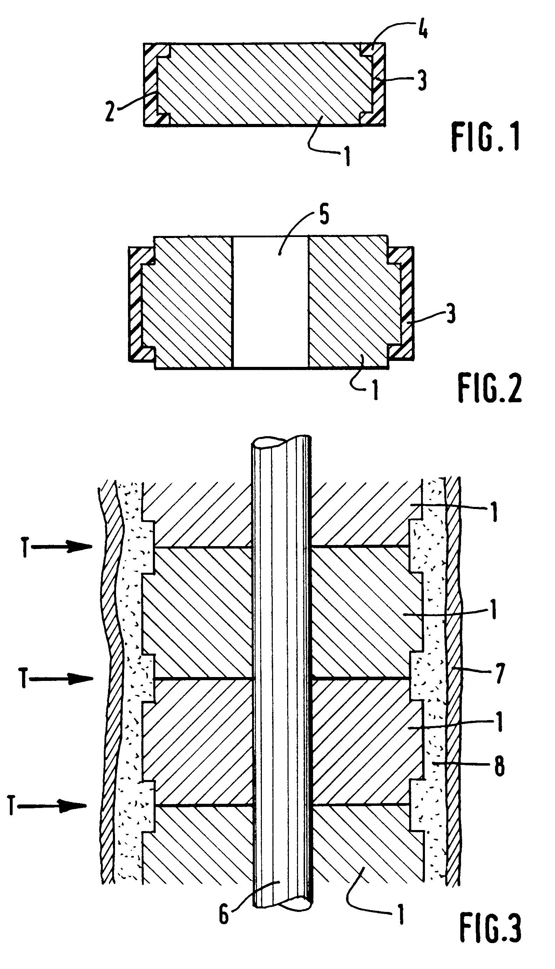

Le piston composite illustré à la figure 1 comporte un corps de piston métallique 1 dont la surface périphérique comporte une portée cylindrique de plus grand diamètre 2.

Le corps de piston 1 est avantageusement réalisé en métal fritté à haute pression, par exemple de l'ordre de 800 kg/cm2.

Selon l'invention, il est prévu autour du corps de piston 1, une garniture 3 en résine fluorée, notamment en PTFE. La garniture une fois surmoulée présente une forme annulaire cylindrique avec une portée principale au contact de la portée en décrochement 2 du corps de piston et deux portées en forme de flasques annulaires 4 disposées au contact de la périphérie du corps de piston de part et d'autre de la portée centrale 2.

Le piston illustré à la figure 2 diffère de celui de la figure 1 essentiellement par le fait qu'il est creux et comporte ainsi un évidement central 5. La garniture 3 est en outre usinée, après surmoulage, de telle manière qu'elle s'étend sur une hauteur inférieure à celle du corps de piston.

On va maintenant décrire en se référant à la figure 3, un mode de réalisation particulier du piston composite illustré à la figure 2.

Dans ce mode de réalisation, on empile une pluralité de corps de piston 1 sur une tige de centrage 6 et l'on met en place l'empilement ainsi réalisé dans un moule souple 7, de forme cylindrique, un espace étant ménagé entre les périphéries des corps de piston et la paroi intérieure du moule.

On introduit dans cet espace une poudre de résine fluorée, notamment de PTFE vierge ou chargé, 8.

On applique alors au moule une pression isostatique par exemple de l'ordre de 300 à 350 kg/cm2 de manière à comprimer la poudre de résine fluorée 8 et réaliser une gaine de résine fluorée autour de l'empilement des corps de piston.

On procède ensuite à une cuisson de l'empilement des corps de piston 1 autour desquels a été réalisée la gaine de résine fluorée dans un four à une température, notamment de l'ordre de 370°C, pour provoquer le frittage de la résine fluorée.

Après un refroidissement contrôlé, par exemple de 30°C par heure, on sépare les pistons par tranchage de la gaine de résine fluorée dans les plans des faces frontales des corps de piston 1, plans de tranchage schématisés par les flèches T sur la figure 3.

On usine ensuite le cas échéant, individuellement, la garniture réalisée sur chaque corps de piston.

La présence d'un évidement central 5 dans le corps de piston permet avantageusement d'effectuer cet usinage au tour, avec reprise par le centre, ce qui permet un excellent centrage et d'excellentes tolérances de diamètre.

On peut ainsi, selon l'invention, obtenir des précisions de l'ordre de ⁺2/100ème de mm sur les dimensions des garnitures.

Bien qu'en relation avec la figure 3, on ait décrit un mode de réalisation permettant la réalisation simultanée de plusieurs pistons composites, l'on peut suivant l'invention réaliser chacun des pistons individuellement. De plus, on peut également réaliser par le procédé selon l'invention des pistons tel que celui illustré à la figure 1 ne comportant pas d'évidement central.

La tenue en température des pistons selon la présente invention se révèle bien supérieure à celle des pistons connus.

Ainsi on constate qu'à des températures de fonctionnement relativement élevées, par exemple de 150°C, l'adhérence de la garniture au corps de piston a plutôt tendance à être meilleure. On ne retrouve pas, ainsi, les phénomènes de décollement de garniture constatés dans les pistons de l'art antérieur.

La présente invention permet de réaliser des pistons composites de grande précision utilisables notamment pour des amortisseurs, des vérins hydrauliques ou des compresseurs de gaz.

## Revendications

1. Procédé de réalisation d'un piston composite comportant un corps de piston métallique et une garniture en résine fluorée, notamment en PTFE comportant les étapes consistant à réaliser un corps de piston métallique (1) et à mettre en place une garniture (3) en résine fluorée, notamment de PTFE sur ledit corps de piston (1), caractérisé par le fait que la garniture (3) est surmoulée sur le corps de piston (1).

2. Procédé selon la revendication 1, caractérisé par le fait que pour surmouler ladite garniture on met en place un corps de piston (1) dans un moule souple (7) de moulage isostatique, on introduit de la poudre de résine fluorée notamment de PTFE entre la périphérie des corps de piston et la paroi intérieure du moule, on applique au moule une pression isostatique de 200 à 500 kg/cm2, et de préférence de 300 à 350 kg/cm2, on procède à une cuisson dans un four à une température, notamment de l'ordre de 370°C, suffisante pour provoquer le frittage de la résine fluorée, et l'on procède à un refroidissement contrôlé.

3. Procédé selon la revendication 2, caractérisé par le fait qu'après refroidissement on usine la surface externe de la garniture surmoulée sur le corps du piston.

4. Procédé selon l'une quelconque des revendications 2 et 3, caractérisé par le fait que l'on effectue les étapes de compression isostatique de cuisson et de refroidissement sur un empilement de corps de piston, après quoi on sépare les pistons par tranchage de la gaine de résine fluorée comprimée et frittée réalisée autour de l'empilement des corps de piston, et enfin l'on usine, le cas échéant, la surface externe de la garniture de chaque piston.

5. Procédé selon l'une quelconque des revendications 1 à 4, caractérisé par le fait que la garniture (3) est réalisée en PTFE chargé.

## Claims

1. A method for producing a composite piston including a metallic piston body and a liner of fluorinated resin, in particular of PTFE, comprising the steps consisting of making a metallic piston body (1) and placing a liner (3) of fluorinated resin, in particular of PTFE, in position on the said piston body (1), characterized in that the liner (3) is moulded onto the piston body (1).

2. A method according to claim 1, characterized in that for moulding-on the said liner, a piston body (1) is placed into position in a flexible isostatic moulding mould (7), fluorinated resin powder, in particular of PTFE, is introduced between the circumference of the piston body and the internal wall of the mould, an isostatic pressure of 200 to 500 kg/cm², and preferably of 300 to 350 kg/cm², is applied to the mould, firing in a furnace is proceeded with at a temperature, in particular of the order of 370°C, which is sufficient to produce the sintering of the fluorinated resin, and controlled cooling is proceeded with.

3. Method according to claim 2, characterized in that after cooling, the outer surface of the liner moulded onto the piston body is machined.

4. Method according to any one of claims 2 and 3, characterized in that the steps of isostatic compression, of firing and of cooling are effected on a stack of piston bodies, whereupon the pistons are separated by cutting the sheath of the compressed and sintered fluorinated resin produced round the stack of piston bodies, and finally the outer surface of the liner of each piston is machined, if required.

5. A method according to any one of claims 1 to 4, characterized in that the liner (3) is made of charged PTFE.

## Patentansprüche

1. Verfahren zur Herstellung eines Verbundkolbens mit einem metallischen Kolbenkörper und einem Mantel aus fluoriertem Kunststoff, insbesondere PTFE, mit den Schritten, die bestehen aus der Herstellung eines metallischen Kolbenkörpers (1) und dem Anbringen eines Mantels (3) aus fluoriertem Kunststoff, insbesondere PTFE, an den Kolbenkörper (1), dadurch gekennzeichnet, daß der Mantel (3) an den Kolbenkörper (1) angeformt wird.

2. Verfahren nach Anspruch 1, dadurch gekennzeichnet, daß man zum Anformen des Mantels einen Kolbenkörper (1) in einer nachgiebigen Form (7) zum isostatischen Formen in Position bringt, ein Pulver aus fluoriertem Kunststoff, insbesondere PTFE, zwischen dem Umfang des Kolbenkörpers und der Innenwand der Form einbringt, einen isostatischen Druck von 200 bis 500 kg/cm², vorzugsweise 300 bis 350 kg/cm² auf die Form ausübt, daß man anschließend in einem Ofen bei einer Temperatur, die zum Sintern des fluorierten Kunststoffs ausreichend ist, insbesondere in der Größenordnung von 370°C, brennt, und danach mit einer kontrollierten Kühlung fortfährt.

3. Verfahren nach Anspruch 2, dadurch gekennzeichnet, daß man nach der Kühlung die äußere Oberfläche des an den Kolbenkörper angeformten Mantels bearbeitet.

4. Verfahren nach Anspruch 2 oder 3, dadurch gekennzeichnet, daß man die Schritte der isostatischen Druckausübung, des Brennens und der Kühlung an einem Stapel von Kolbenkörpern ausführt, wonach man die Kolben trennt, indem man die um den Stapel der Kolbenkörper gebildete Hülse aus verdichtetem und gesinterten fluorierten Kunststoff zerschneidet und schließlich ggf. die äußere Oberfläche des Mantels jedes einzelnen Kolbens bearbeitet.

5. Verfahren nach einem der Ansprüche 1 bis 4, dadurch gekennzeichnet, daß der Mantel (3) aus verstärktem PTFE hergestellt wird.
